# FASCICULE DE BREVET EUROPEEN

(11) **EP 2 499 381 B1**
(45) Date de publication et mention de la délivrance du brevet: **10.09.2014**
(21) Numéro de dépôt: 10787822.5
(22) Date de dépôt: 09.11.2010
(51) Int. Cl.: F16B 1/00, F16B 5/02

(54) **PROCÉDÉ D'ASSEMBLAGE D'UNDISPOSITIF D'ASSEMBLAGE MUNI D'UN REPÈRE VISUEL**
VERFAHREN ZUR MONTAGE EINER MONTAGEVORRICHTUNG MIT EINER VISUELLEN REFERENZMARKIERUNG
METHOD FOR THE ASSEMBLY OF AN ASSEMBLY DEVICE PROVIDED WITH A VISUAL REFERENCE MARK

(30) Priorité: 09.11.2009 FR 0957911
(43) Date de publication de la demande: 19.09.2012
(73) Titulaire: Lisi Aerospace, 75012 Paris (FR)
(72) Inventeur: VERDIER, Florent, F-92500 Rueil-malmaison (FR)
(74) Mandataire: Chauveau, Ariane
(86) Numéro de dépôt international: PCT/FR2010/000744
(87) Numéro de publication internationale: WO 2011/055044

(56) Documents cités:
- DE-C1- 10 203 133
- US-A- 3 915 053
- US-A- 5 039 265

## Description

### DOMAINE TECHNIQUE DE L'INVENTION

La présente invention se rapporte à un procédé d'assemblage d'un dispositif d'assemblage muni d'un repère visuel. Le domaine technique de l'invention est, d'une façon générale, celui des fixations. Plus particulièrement, l'invention concerne des vis, des écrous, des fixations à gorges de sertissage, des bagues de sertissage et des douilles destinées à fixer des éléments de structure d'appareil de type aéronef préalablement alésés. Le document US 3, 915, 053A montre un procédé d'assemblage selon le preambule de la revendication 1.

### ARRIERE PLAN TECHNOLOGIQUE DE L'INVENTION

Dans l'état de la technique, lors du montage de dispositifs d'assemblage sur une structure, il est indispensable pour l'opérateur, dans une première opération, de mesurer lui-même l'épaisseur réelle de la structure à assembler pour choisir le dispositif de fixation adéquat en longueur car une différence peut apparaître entre une épaisseur théorique de référence, connue par l'opérateur, et une épaisseur réelle, cette différence étant due aux diverses tolérances de fabrication existant dans le domaine de l'assemblage notamment celle de l'épaisseur des éléments de structure.

Mais, en pratique, la mesure de cette épaisseur étant difficile et fastidieuse, son résultat est approximatif, voire erroné. De plus, le montage même du dispositif d'assemblage peut provoquer
- un affaissement des éléments à assembler à l'endroit où le dispositif d'assemblage est monté à cause d'un manque de dureté d'un mastic d'interposition appliqué entre lesdits éléments.
- un allongement dudit dispositif en réaction de l'effort exercé, d'un côté, par une tête dudit dispositif et, de l'autre côté, soit par un écrou, soit par une bague de sertissage.

Toutes ces imprécisions peuvent facilement entraîner un mauvais choix de longueur de dispositif d'assemblage et engendrer le montage d'un dispositif de longueur inappropriée.

Dans l'art antérieur, pour simplifier le choix de dispositif à utiliser pour l'assemblage, on définit une plage de serrage acceptable par chaque dispositif. En fait, cette plage correspond, pour une épaisseur théorique de référence donnée, à l'écart entre l'épaisseur réelle minimale de structure et l'épaisseur réelle maximale de structure qu'il est possible d'assembler avec un dispositif donné, i.e. à l'intervalle de variation potentielle d'épaisseur de l'ensemble des éléments de la structure. Typiquement, cette plage de serrage est de l'ordre d'un ou deux seizièmes de pouce. Une famille de dispositifs d'assemblages comporte donc plusieurs dispositifs de longueur différente, l'écart de longueur les séparant correspondant généralement à la plage de serrage, à une plage de recouvrement près.

Après le montage du dispositif d'assemblage que l'opérateur a choisi - typiquement une vis ou une fixation à gorge de sertissage-, celui-ci vérifie son choix après serrage d'un écrou ou sertissage d'une bague sur les gorges de la fixation. Quatre cas peuvent alors se présenter à lui :
- la vis ne dépasse pas de l'écrou, ce qui montre que le dispositif d'assemblage est beaucoup trop court, auquel cas on doit le remplacer complètement ;
- la longueur du dispositif semble correcte à celui qui l'a installé, auquel cas il ne le remplace pas, alors qu'en réalité il est trop court de quelques dixièmes de millimètre, ce qui représente un risque grave de cisaillement du filetage ou de la bague sertie, ou de desserrage de l'écrou ;
- l'écrou vissé ou la bague sertie n'est pas du tout en appui contre la structure, ce qui montre que le dispositif est beaucoup trop long, auquel cas on doit le remplacer complètement ;
- la longueur du dispositif semble correcte à celui qui l'a installée, auquel cas il ne remplace pas le dispositif d'assemblage, alors qu'en réalité il est trop long, i.e. l'écrou vissé n'est pas en appui contre la structure mais en butée contre une extrémité du filetage du dispositif, et ainsi le dispositif d'assemblage n'applique pas d'effort de serrage sur la structure à assembler.

Dans le cas où l'opérateur se rend compte de son mauvais choix, on observe une perte de matériel et de temps considérables car il doit, dans une deuxième opération, démonter le dispositif qui ne pourra plus assurer sa fonction dans la plupart des cas, et remonter, dans une troisième opération, et autant de fois que cela nécessaire, un autre dispositif d'assemblage spécifique, qu'on appelle "cote réparation".

Dans le cas où il ne se rend pas compte de son mauvais choix, cette erreur est lourde de conséquence pour la résistance de la structure à assembler.

Le procédé de détermination de longueur de dispositif de l'état de la technique est donc long, fastidieux, imprécis, coûteux et dangereux.

### DESCRIPTION GENERALE DE L'INVENTION

L'invention propose de résoudre tous les problèmes techniques liés au choix du dispositif de longueur adéquate.

Dans l'invention, pour éviter toute erreur de choix de longueur de dispositif d'assemblage, on a eu l'idée de les munir d'un repère visuel à leur extrémité opposée à leur tête. Plus précisément, dans le cas d'une vis sans douille par exemple, le repère visuel est disposé sur le fût de la vis, à proximité de son filetage. Dans le cas d'une vis avec douille, le repère visuel est disposé à l'extrémité inférieure de la douille, sur sa surface extérieure. Selon l'invention, dans les deux cas,
- soit le repère visuel est ménagé à une distance de la limite inférieure correspondant à la plage de serrage acceptable par le dispositif d'assemblage sur lequel il est ménagé, i.e. à l'intervalle de variation potentielle d'épaisseur de structure à assembler,
- soit le repère visuel s'étend sur une distance correspondant au plus à cette plage de serrage.

Ainsi, après une première opération d'insertion d'un dispositif d'assemblage selon l'invention présentant une longueur correspondant à l'épaisseur théorique de référence des éléments à assembler, connue par l'opérateur, avant tout vissage de l'écrou ou toute installation de la bague de sertissage, celui-ci vérifie visuellement et rapidement, dans une deuxième opération, que la longueur du dispositif choisi est adaptée. Concrètement, il regarde la position de la surface de l'élément à assembler situé du côté du filetage par rapport au repère visuel pour valider ou non son choix de taille de dispositif.

L'invention présente donc de nombreux avantages. Elle permet notamment à l'opérateur de gagner du temps car il n'a plus besoin de réaliser les deux opérations consistant à mesurer l'épaisseur réelle des éléments à fixer et à visser l'écrou pour vérifier son choix de longueur de dispositif ; aucun moyen de mesure de type jauge ou calibre de contrôle n'est, maintenant, nécessaire. De plus, puisque dans les assemblages aéronautiques structuraux, on ne réutilise pas les dispositifs d'assemblage qui ont déjà été installés, on jette, dans l'état de la technique, ceux qui sont invalidés, ce qui représente un gaspillage non négligeable que l'invention propose maintenant d'éviter. Enfin, le choix de dispositif est sûr et fiable.

L'invention a donc pour objet un procédé d'assemblage d'éléments préalablement alésés tel que défini par la revendication 1.

L'invention et ses différentes applications seront mieux comprises à la lecture de la description qui suit et à l'examen des figures qui l'accompagnent.

### BREVE DESCRIPTION DES FIGURES

Celles-ci ne sont présentées qu'à titre indicatif et nullement limitatif de l'invention. Les figures montrent :
- figure 1 : une représentation schématique d'une vue de côté d'un premier exemple et d'un deuxième exemple de dispositifs d'assemblage selon l'invention ;
- figure 2 : une représentation schématique d'une vue de côté du deuxième exemple de dispositif d'assemblage selon l'invention dans trois positions d'assemblage distinctes ;
- figure 3 : une représentation schématique d'une vue de côté d'un troisième exemple de dispositif d'assemblage selon l'inventions;

Dans ces figures, les éléments identiques conservent les mêmes références.

### DESCRIPTION DETAILLEE DES FORMES DE REALISATION PREFEREES DE L'INVENTION

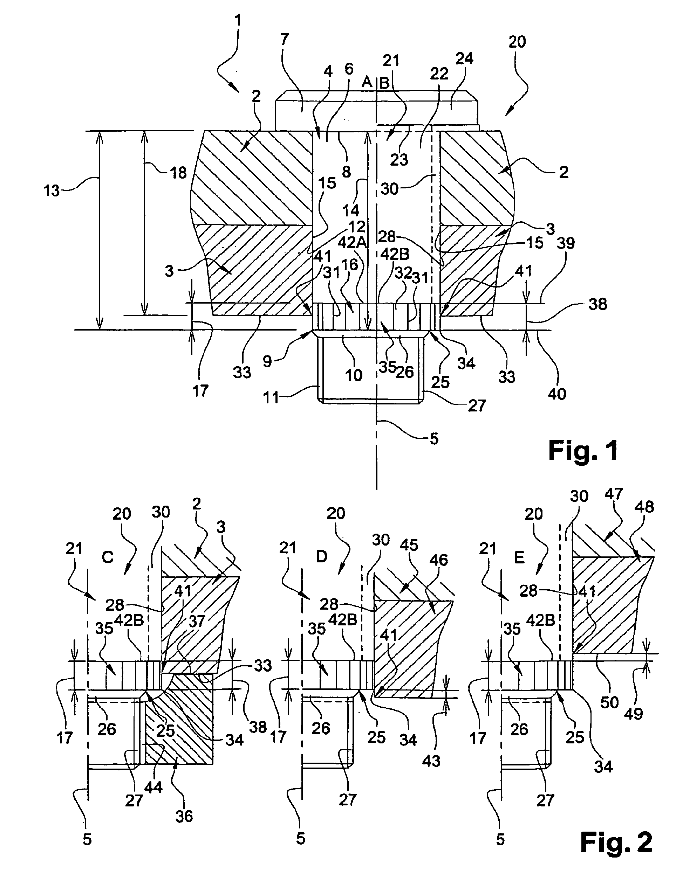

La figure 1 représente, de façon schématique, du côté gauche A d'un axe de symétrie 5 le traversant en son centre, une vue de côté d'un premier exemple de dispositif 1 d'assemblage de deux éléments 2 et 3, et du côté droit B de cet axe 5, une vue de côté d'un deuxième exemple de dispositif 20 d'assemblage des mêmes éléments 2 et 3. Dans un exemple, les éléments à assembler 2 et 3 constituent une structure d'avion et présentent ensemble une épaisseur globale de référence 18 pouvant varier entre une épaisseur réelle minimale 39 et une épaisseur réelle maximale 40. Par ailleurs, la mesure par l'opérateur de cette épaisseur réelle est difficile et approximative. La variation potentielle d'épaisseur réelle des éléments structuraux est due à diverses imprécisions relatives à l'assemblage. Parmi ces imprécisions structurelles, on peut notamment citer
- une tolérance d'épaisseur de fabrication des éléments 2 et 3,
- un affaissement d'un des éléments 2 et 3 à l'endroit où le dispositif 1 d'assemblage est monté à cause d'un manque de dureté d'un mastic d'interposition, non représenté, appliqué entre lesdits éléments.

Cette variation potentielle d'épaisseur structurelle est délimitée par un intervalle 38 de variation d'épaisseur prédéterminé connu par l'opérateur et correspondant à une plage de serrage acceptable par le dispositif 1 d'assemblage choisi. Un alésage 15 est préalablement réalisé dans chaque élément 2 et 3.

Par ailleurs, un allongement, de quelques dixièmes de millimètre, du dispositif d'assemblage peut se produire en réaction de l'effort exercé, d'un côté, par une tête 7 dudit dispositif et, de l'autre côté, par un écrou.

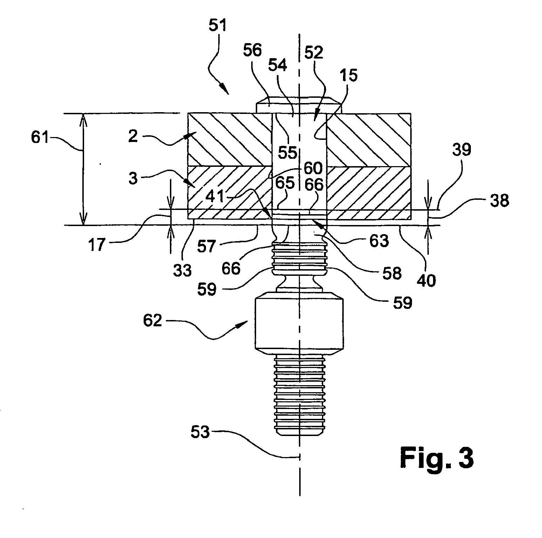

Le dispositif 1 d'assemblage comporte un élément mâle, par exemple une vis 4 s'étendant suivant l'axe 5 et comportant un fût 6 se prolongeant, à une première extrémité 8, en la tête 7, et à une deuxième extrémité 9, via un épaulement 10, en un filetage 11. Dans une variante, par exemple celle décrite avec la figure 3, le fût se prolonge, à la deuxième extrémité, en des gorges de sertissage. Le fût 6 présente une surface extérieure 12 ayant une hauteur 14, la surface 12 étant destinée à être en contact avec l'alésage 15. La hauteur 14 du fût 6 est définie, pour l'assemblage d'éléments présentant une épaisseur globale de référence 18 donnée, comme étant égale à au moins l'épaisseur maximale réelle 40 des éléments à assembler. La hauteur 14 peut donc être soit égale à l'épaisseur maximale réelle 40, soit légèrement supérieure, pour inclure par exemple une tolérance de fabrication. Dans le cas d'un élément mâle de type vis 4, le dispositif 1 peut recevoir un écrou, représenté sur la figure 2C, apte à être vissé autour du filetage 11 jusqu'à être en appui contre une surface inférieure 33 de l'élément inférieur 3. Dans le cas précédemment décrit d'un élément mâle présentant des gorges de sertissage, le dispositif selon l'invention peut recevoir une bague de sertissage apte à être sertie sur les gorges jusqu'à être en appui contre un des éléments à assembler. Dans l'exemple, le dispositif 1 ne comporte pas de douille. Selon l'invention, la surface extérieure 12 du fût 6 de la vis 4 présente un repère visuel 16 s'étendant depuis la deuxième extrémité 9, dite limite inférieure, vers la tête 7. Le repère visuel 16 s'étend sur une distance 17 mesurée selon l'axe 5. Cette distance 17 correspond au maximum de la plage de serrage acceptable par le dispositif 1 d'assemblage, i.e. au maximum d'au moins l'intervalle 38 de variation potentielle d'épaisseur des éléments 2 et 3, jusqu'à une limite supérieure 42A. En effet, si la hauteur 14 du fût 6 est définie comme étant égale à l'épaisseur maximale réelle 40 des éléments à assembler, alors la plage de serrage correspond à l'intervalle 38 de variation potentielle d'épaisseur des éléments 2 et 3. Si la hauteur 14 du fût 6 est définie comme étant supérieure à l'épaisseur maximale réelle 40, alors la plage de serrage correspond à la différence entre la hauteur de fût 6 et l'épaisseur minimale réelle 39 des éléments à assembler.

Dans un exemple, la distance 17 sur laquelle s'étend le repère visuel vaut 90% de la plage de serrage acceptable par le dispositif 1 d'assemblage. Ainsi, selon l'invention, même si la valeur de la distance 17 n'est précise qu'à 10% près, en aucun cas, elle ne dépassera la valeur maximale de la plage de serrage. Ces 10% permettent aussi de couvrir les imprécisions liées à l'appréciation visuelle de l'opérateur ou encore de prendre en compte l'allongement sous charge du dispositif.

La limite inférieure du repère visuel 16 est matérialisée par le début de l'épaulement 10.

Le dispositif 20 d'assemblage comporte une vis 21 s'étendant suivant l'axe 5 et comportant un fût 22 se prolongeant, à une première extrémité 23, en une tête 24, et à une deuxième extrémité 25, via un épaulement 26, en un filetage 27. Le dispositif 20 peut recevoir un écrou, non représenté, apte à être vissé autour du filetage 27 jusqu'à être en appui contre la surface inférieure 33 de l'élément inférieur 3. Le dispositif 20 comporte enfin une douille 30 apte à recevoir le fût 22 de la vis 21 en son sein. La douille 30 présente une surface extérieure 28 ayant une hauteur 13 égale à une hauteur 14 du fût 22 de la vis 21, la surface 28 étant destinée à être en contact avec l'alésage 15. La hauteur 14 du fût 22 est définie pour l'assemblage d'éléments présentant une épaisseur globale de référence 18 donnée, comme étant égale à au moins l'épaisseur maximale réelle 40 des éléments à assembler. La hauteur 14 peut donc être soit égale à l'épaisseur maximale réelle 40, soit légèrement supérieure, pour inclure une tolérance de fabrication par exemple. Selon l'invention, la surface extérieure 28 de la douille 30 présente un repère visuel 35 s'étendant depuis son extrémité inférieure 34, dite limite inférieure, vers la tête 24 sur une distance 17 correspondant au maximum de la plage de serrage acceptable par le dispositif 1 d'assemblage, i.e. au maximum d'au moins l'intervalle 38 de variation potentielle d'épaisseur des éléments 2 et 3, jusqu'à une limite supérieure 42B.

Dans l'exemple, les repères visuels 16 et 35, dit repères visuels d'épaisseur, présentent une multitude de rainures axiales 31. Dans l'exemple les repères visuels 16 et 35 présentent vingt-quatre rainures axiales 31.

Dans une variante préférée représentée sur la figure 3, le repère visuel présente au moins
- soit une rainure circulaire de quelques micromètres d'épaisseur et/ou de profondeur au niveau de sa limite supérieure,
- soit un trait de peinture circulaire de quelques micromètres d'épaisseur.

Le repère visuel 35 du dispositif 20 présente un revêtement 32 de couleur différente d'une couleur de la surface extérieure 28 et/ou différente de celle d'une surface inférieure 33 de l'élément 3 situé du côté où l'écrou est vissé.

Dans un exemple, la couleur est vive, de préférence fluorescente. Dans un exemple, le revêtement est une peinture.

Dans une variante, le repère visuel selon l'invention présente un marquage laser ou chimique ou mécanique altérant un état de surface de la surface extérieure.

Les deux dispositifs 1 et 20 correspondent à un bon choix de longueur, adaptée à l'épaisseur réelle des éléments 2 et 3 à assembler. En effet, les repères visuels 16 et 35 sont visibles par l'opérateur sans dépasser entièrement de l'élément inférieur 3. Plus précisément, une arête 41, formée par une intersection circulaire entre l'alésage 15 et la surface inférieure 33, est au contact desdits repères.

La figure 2 représente, de façon schématique, une vue de côté du deuxième exemple de dispositif 20 d'assemblage selon l'invention dans trois positions C, D et E d'assemblage distinctes.

Le procédé d'assemblage d'éléments préalablement alésés selon l'invention comporte des étapes dans lesquelles
- on insère complètement le dispositif 20 d'assemblage dans l'alésage 15, puis
- on vérifie visuellement que l'arête 41 est en regard, de préférence en contact, avec le repère visuel 35 ménagé sur la surface extérieure dudit dispositif, et enfin
- on visse l'écrou 36 autour de l'élément mâle 21 ou on sertit la bague sur les gorges jusqu'à ce que l'écrou ou la bague soit en appui contre la surface inférieure 33 des éléments 2 et 3 à assembler.

La position C est la même que sur la figure 1 et correspond à un bon choix de dispositif 20, adapté à l'épaisseur réelle des éléments 2 et 3 à assembler. En effet, le repère visuel 35 est visible sans dépasser entièrement de l'élément inférieur 3. Plus précisément, l'arête 41 est au contact du repère visuel 35. Dans une telle position, l'opérateur peut visser complètement l'écrou 36 et constater qu'une surface supérieure 37 dudit écrou est en appui contre la surface inférieure 33 de l'élément 3 et que tous les filets 44 de l'écrou 36 sont en prise avec le filetage 27 de la vis 21, ce qui assure une bonne tenue dans le temps du dispositif 20 et de l'alésage 15.

La position D correspond à un mauvais choix de dispositif 20, inadapté à l'épaisseur réelle d'éléments 45 et 46 à assembler. En effet, le repère visuel 35 est invisible par l'opérateur car il ne dépasse pas du tout de l'élément inférieur 46. Plus précisément, l'extrémité inférieure 34 de la surface extérieure 28 de la douille 30 est au contact de l'alésage 15, à une distance 43, de l'ordre de quelques dixièmes de millimètre, de l'arête 41. En plus du fait qu'un contact intégral entre l'alésage 15 et la surface extérieure 28 ne soit pas assuré, si un écrou était vissé autour de la vis 21, tous les filets de l'écrou ne seraient pas en prise avec le filetage 27 de ladite vis, ce qui représente un risque important de cisaillement du filetage 27 de la vis 21 et/ou de desserrage de l'écrou. L'opérateur doit donc retirer simplement le dispositif 20, qu'il peut conserver pour une utilisation ultérieure et choisir un autre dispositif plus long.

La position E correspond également à un mauvais choix de dispositif 20, inadapté à l'épaisseur réelle d'éléments 47 et 48 à assembler. En effet, le repère visuel 35 est visible, mais dépasse entièrement de l'élément inférieur 48. Plus précisément, la limite supérieure 42B du repère visuel 35 n'est pas au contact de l'alésage 15 ; elle est à une distance 49, de l'ordre de quelques dixièmes de millimètre, de l'arête 41. Si un écrou était vissé autour de la vis 21, la surface supérieure de l'écrou ne serait pas au contact d'une surface inférieure 50 de l'élément 49 ce qui représente un risque important de mauvaise tenue de l'assemblage et de dégradation de l'alésage 15. L'opérateur doit donc retirer simplement le dispositif 20, qu'il peut conserver pour une utilisation ultérieure et choisir un autre dispositif moins long.

La figure 3 représente, de façon schématique, une vue de côté d'un troisième exemple de dispositif 51 d'assemblage selon l'invention des deux mêmes éléments 2 et 3 décrits précédemment.

Le dispositif 51 d'assemblage comporte un élément mâle, par exemple une tige 52 s'étendant suivant un axe 53 et comportant un fût 54 se prolongeant, à une première extrémité 55, en une tête 56, et à une deuxième extrémité 57, via un épaulement 58, en des gorges de sertissage 59. Le fût 54 présente une surface extérieure 60 ayant une hauteur 61, la surface 60 étant destinée à être en contact avec l'alésage 15. La hauteur 61 du fût 54 est définie, pour l'assemblage d'éléments présentant une épaisseur globale de référence donnée, comme étant égale à au moins l'épaisseur maximale réelle 40 des éléments à assembler. La hauteur 61 peut donc être soit égale à l'épaisseur maximale réelle 40, soit légèrement supérieure, pour inclure une tolérance de fabrication par exemple. Le dispositif 51 peut recevoir dans l'exemple, une bague de sertissage 62 apte à être sertie, au moyen d'un outil de sertissage non représenté, sur les gorges 59 jusqu'à être en appui contre la surface inférieure 33 de l'élément inférieur 3. Selon l'invention, la surface extérieure 60 du fût 54 de la tige 52 présente un repère visuel 63 s'étendant depuis la deuxième extrémité 57 vers la tête 56 sur une distance 17 mesurée selon l'axe 53. La distance 17 correspond au maximum à au moins l'intervalle 38 de variation potentielle d'épaisseur, jusqu'à une limite supérieure 65. En effet, comme dans l'exemple représenté à la figure 1, si la hauteur 61 du fût 54 est définie comme étant supérieure à l'épaisseur maximale réelle 40, alors la plage de serrage correspond à la différence entre la hauteur de fût 54 et l'épaisseur minimale réelle 39 des éléments à assembler. La plage de serrage comprend ainsi l'intervalle prédéfini 38 et une cote supplémentaire, par exemple prenant en compte une tolérance de fabrication.

Dans l'exemple, selon l'invention, le repère visuel 63, dit repère visuel d'épaisseur, présente cinq rainures circulaires 66 de quelques micromètres d'épaisseur et/ou de profondeur entre sa limite supérieure 65 et la deuxième extrémité 57 du fût 54.

Dans une première variante de l'invention, le repère visuel ne présente qu'un seul marquage circulaire au niveau de sa limite supérieure 65.

Dans une deuxième variante de l'invention, le repère visuel présente un premier marquage circulaire au niveau du fût et un deuxième marquage au niveau de la deuxième extrémité du fût.

Le dispositif 51 correspond à un bon choix de longueur, adaptée à l'épaisseur réelle des éléments 2 et 3 à assembler car le repère visuel 63 est visible par l'opérateur sans dépasser entièrement de l'élément inférieur 3.

Plus précisément, l'arête 41, formée par l'intersection circulaire entre l'alésage 15 et la surface inférieure 33, est au contact du repère.

En variante, le dispositif 51 peut comporter en outre une douille sur laquelle est ménagé un repère visuel. Préférentiellement, ce repère visuel est configuré de manière analogue à celui de la douille 30 représentée aux figures 1 et 2.

Un procédé d'assemblage des éléments (2, 3) à l'aide du dispositif 51, seul ou avec douille, comporte une étape de choix de la taille dudit dispositif 51. Cette étape est analogue à celle décrite précédemment pour les dispositifs 1 et 20 (figure 2) et fait intervenir de la même manière les repères visuels de la tige 52 et/ou d'une éventuelle douille.

Suite à un choix approprié de dispositif 51 en fonction de l'épaisseur réelle des éléments (2, 3) à assembler, une étape de sertissage de la bague 62 dans les gorges 59 est effectuée. Un assemblage est correct lorsqu'une surface supérieure de la bague est en appui contre la surface inférieure 33 de l'élément 3 à assembler.

## Revendications

1. Procédé d'assemblage d'éléments (2 ; 3) préalablement alésés (15), par un dispositif (1, 20, 51) d'assemblage, les éléments présentant ensemble une épaisseur de référence (18) pouvant varier dans un intervalle prédéfini (38) entre une épaisseur minimale réelle (39) et une épaisseur maximale réelle (40), le dispositif comportant :
- un élément mâle (4 ; 21 ; 52) s'étendant suivant un axe (5 ; 53) et comportant un fût (6 ; 22 ; 54) se prolongeant, à une première extrémité (8 ; 23 ;55), en une tête (7 ; 24 ; 56), et à une deuxième extrémité (9 ; 25 ; 57), via un épaulement (10 ; 26 ; 58), en un filetage (11 ; 27) ou en des gorges de sertissage (59),
- une surface extérieure (12 ; 28 ; 60) destinée à être en contact avec l'alésage ayant une hauteur (13 ; 61) égale à une hauteur (14) du fût choisie de manière à correspondre à au moins une épaisseur maximale réelle (40) des éléments à assembler, et comprenant une plage de serrage choisie comme étant au moins égale à l'intervalle prédéfini (38),
ladite surface extérieure présentant un repère visuel (16 ; 35 ; 63), tel que selon l'axe (5, 53) ledit repère est situé à une distance (17) d'une limite inférieure (9; 34; 57), ou s'étend sur une distance (17) depuis une limite inférieure jusqu'à une limite supérieure (42A ; 42B ; 65) vers la tête, ladite distance (17) correspondant au maximum à la plage de serrage du dispositif,
ledit procédé comportant les étapes suivantes :
- on insère complètement le dispositif (1, 20, 51) d'assemblage dans l'alésage,
- **caractérisé en ce qu'** on vérifie visuellement qu'une arête (41), formée par une intersection circulaire entre l'alésage et la surface inférieure, est à la fois :
- au-dessus d'une limite inférieure (9 ; 34 ; 57) de la surface extérieure, et
- au-dessous du repère visuel (16 ; 35; 63) ou d'une limite supérieure (42A ; 42B ; 65) dudit repère.

2. Procédé selon la revendication 1, **caractérisé en ce que** le repère visuel présente au moins une rainure circulaire (66).

3. Procédé selon l'une des revendications 1 à 2, **caractérisé en ce que**
- la surface extérieure est celle du fût de l'élément mâle,
- la limite inférieure du repère visuel est matérialisée par le début (9 ; 57) de l'épaulement (10 ; 58).

4. Procédé selon l'une des revendications 1 à 2, **caractérisé en ce que**
- le dispositif comporte une douille (30) apte à recevoir le fût de l'élément mâle en son sein,
- la surface extérieure est celle de la douille,
- la limite inférieure du repère visuel est matérialisée par une extrémité inférieure (34) de la douille.

5. Procédé selon l'une des revendications 1 à 4, **caractérisé en ce que** la distance (17) du repère visuel vaut 90% de la plage de serrage.

6. Procédé selon l'une des revendications 1 à 5, **caractérisé en ce que** le repère visuel présente au moins une rainure axiale (31).

7. Procédé selon l'une des revendications 1 à 6, **caractérisé en ce que**
- au moins un des repères visuels présente un revêtement (32) de couleur différente d'une couleur de la surface extérieure et/ou différente de celle d'une surface inférieure (33) d'un des éléments assemblés situé du côté où l'écrou est vissé ou la bague sertie.

8. Procédé selon la revendication 7, **caractérisé en ce que** le revêtement est une peinture de couleur vive, de préférence fluorescente.

9. Procédé selon l'une des revendications 1 à 8, **caractérisé en ce que** au moins un des repères visuels présente un marquage mécanique, laser ou chimique altérant un état de surface de la surface extérieure.

10. Procédé selon l'une des revendications 1 à 9, comportant ensuite une étape de vissage d'un écrou (36) sur le filetage (11 ; 27) ou de sertissage d'une bague sur les gorges (59).

## Patentansprüche

1. Verfahren zum Zusammenbau vorher durchbohrter (15) Elemente (2; 3) durch eine Montagevorrichtung (1, 20, 51),
wobei die Elemente zusammen eine Referenzdicke (18) aufweisen, die in einem vordefinierten Zwischenraum (38) zwischen einer realen minimalen Dicke (39) und einer realen maximalen Dicke (40) variieren kann,
wobei die Vorrichtung aufweist:
- ein Einsteckelement (4; 21; 52), das sich gemäß einer Achse (5; 53) erstreckt und einen Schaft (6; 22; 54) aufweist, der sich an einem ersten Ende (8; 23; 55) durch einen Kopf (7; 24; 56) und an einem zweiten Ende (9; 25; 57) über eine Schulter (10; 26; 58) in einem Gewinde (11; 27) oder in CrimpensRillen (59) verlängert,
- eine Außenfläche (12; 28; 60), die dazu bestimmt ist, mit der Bohrung in Kontakt zu sein, die eine Höhe (13; 61) gleich einer Höhe (14) des Schafts hat, die so gewählt wird, dass sie mindestens einer realen maximalen Dicke (40) der zusammenzubauenden Elemente entspricht, und einen Klemmbereich enthält, der so gewählt wird, dass er mindestens gleich dem vordefinierten Zwischenraum (38) ist,
wobei die Außenfläche eine visuelle Markierung (16; 35; 63) aufweist, derart, dass die Markierung sich gemäß der Achse (5, 53) in einem Abstand (17) von einer Untergrenze (9; 34; 57) befindet, oder sich über eine Weite (17) von einer Untergrenze bis zu einer Obergrenze (42A; 42B; 65) zum Kopf erstreckt, wobei die Weite (17) höchstens dem Klemmbereich der Vorrichtung entspricht,
wobei das Verfahren die folgenden Schritte aufweist:
- die Montagevorrichtung (1, 20, 51) wird vollständig in die Bohrung eingeführt,
- **dadurch gekennzeichnet, dass** visuell überprüft wird, dass eine von einer kreisförmigen Schnittlinie zwischen der Bohrung und der Innenfläche geformte Kante (41) sich gleichzeitig befindet:
- oberhalb einer Untergrenze (9; 34; 57) der Außenfläche, und
- unterhalb der visuellen Markierung (16; 35; 63) oder einer Obergrenze (42A; 42B; 65) der Markierung.

2. Verfahren nach Anspruch 1, **dadurch gekennzeichnet, dass** die visuelle Markierung mindestens eine Kreisnut (66) aufweist.

3. Verfahren nach einem der Ansprüche 1 bis 2, **dadurch gekennzeichnet, dass**
- die Außenfläche diejenige des Schafts des Einsteckelements ist,
- die Untergrenze der visuellen Markierung durch den Beginn (9; 57) der Schulter (10; 58) gebildet wird.

4. Verfahren nach einem der Ansprüche 1 bis 2, **dadurch gekennzeichnet, dass**
- die Vorrichtung eine Hülse (30) aufweist, die den Schaft des Einsteckelements in sich aufnehmen kann,
- die Außenfläche diejenige der Hülse ist,
- die Untergrenze der visuellen Markierung von einem unteren Ende (34) der Hülse gebildet wird.

5. Verfahren nach einem der Ansprüche 1 bis 4, **dadurch gekennzeichnet, dass** die Weite (17) der visuellen Markierung gleich 90% des Klemmbereichs ist.

6. Verfahren nach einem der Ansprüche 1 bis 5, **dadurch gekennzeichnet, dass** die visuelle Markierung mindestens eine axiale Nut (31) aufweist.

7. Verfahren nach einem der Ansprüche 1 bis 6, **dadurch gekennzeichnet, dass**
- mindestens eine der visuellen Markierungen eine Beschichtung (32) einer Farbe aufweist, die sich von einer Farbe der Außenfläche und/oder von derjenigen einer Innenfläche (33) eines der zusammengebauten Elemente unterscheidet, die sich auf der Seite befindet, wo die Mutter aufgeschraubt oder der Ring eingepasst wird.

8. Verfahren nach Anspruch 7, **dadurch gekennzeichnet, dass** die Beschichtung eine helle Farbe Anstrichmittel, vorzugsweise eine fluoreszierende Farb ist.

9. Verfahren nach einem der Ansprüche 1 bis 8, **dadurch gekennzeichnet, dass** mindestens eine der visuellen Markierungen eine mechanische, Laser- oder chemische Kennzeichnung aufweist, die einen Oberflächenzustand der Außenfläche verändert.

10. Verfahren nach einem der Ansprüche 1 bis 9, das anschließend einen Schritt des Schraubens einer Mutter (36) auf das Gewinde (11; 27) oder des Einpassens eines Crimpensrings auf die Rillen (59) aufweist.

## Claims

1. Method for assembling pre-bored (15) elements (2; 3) by an assembly device (1, 20, 51),
the elements together having a reference thickness (18) which can vary within a predefined range (38) between an actual minimum thickness (39) and an actual maximum thickness (40),
the device comprising:
- a male element (4; 21; 52) extending along an axis (5; 53) and comprising a shank (6; 22; 54) which is prolonged, at a first end (8; 23; 55), into a head (7; 24; 56), and, at a second end (9; 25; 57), via a shoulder (10; 26; 58), into a thread (11; 27) or into swaging grooves (59),
- an outer surface (12; 28; 60) intended to be in contact with the bore, having a height (13; 61) equal to a height (14) of the shank, chosen so as to correspond to at least an actual maximum thickness (40) of the elements to be assembled, and comprising a grip range chosen to be at least equal to the predefined range (38),
the said outer surface having a visual reference mark (16; 35; 63), such that, along the axis (5, 53), the said reference mark is situated at a distance (17) from a lower limit (9; 34; 57), or extends over a distance (17) from a lower limit to an upper limit (42A; 42B; 65) towards the head, the said distance (17) corresponding at most to the grip range of the device,
the said method comprising the following steps:
- the assembly device (1, 20, 51) is completely inserted into the bore,
- **characterized in that** it is visually checked that an edge (41), formed by a circular intersection between the bore and the lower surface, is both:
- above a lower limit (9; 34; 57) of the outer surface, and
- below the visual reference mark (16; 35; 63) or an upper limit (42A; 42B; 65) of the said reference mark.

2. Method according to Claim 1, **characterized in that** the visual reference mark has at least one circular groove (66).

3. Method according to either of Claims 1 and 2, **characterized in that**
- the outer surface is that of the shank of the male element,
- the lower limit of the visual reference mark is materialized by the beginning (9; 57) of the shoulder (10; 58).

4. Method according to either of Claims 1 and 2, **characterized in that**
- the device comprises a sleeve (30) capable of receiving the shank of the male element within it,
- the outer surface is that of the sleeve,
- the lower limit of the visual reference mark is materialized by a lower end (34) of the sleeve.

5. Method according to one of Claims 1 to 4, **characterized in that** the distance (17) of the visual reference mark equals 90% of the grip range.

6. Method according to one of Claims 1 to 5, **characterized in that** the visual reference mark has at least one axial groove (31).

7. Method according to one of Claims 1 to 6, **characterized in that**
- at least one of the visual reference marks has a coating (32) with a colour which differs from a colour of the outer surface and/or which differs from the colour of a lower surface (33) of one of the assembled elements situated on the side where the nut is screwed or the swage ring is swaged.

8. Method according to Claim 7, **characterized in that** the coating is a bright colour, preferably fluorescent, paint.

9. Method according to one of Claims 1 to 8, **characterized in that** at least one of the visual reference marks has a mechanical, laser or chemical marking which alters a surface state of the outer surface.

10. Method according to one of Claims 1 to 9, then comprising a step of screwing a nut (36) onto the thread (11; 27) or swaging a swage ring on the swaging grooves (59).
